# EUROPÄISCHE PATENTSCHRIFT

(11) **EP 4 536 508 B1**
(45) Veröffentlichungstag und Bekanntmachung des Hinweises auf die Patenterteilung: **18.03.2026**
(21) Anmeldenummer: 23730812.7
(22) Anmeldetag: 05.06.2023
(51) Int. Cl.: B60N 3/02

(54) **DACHHALTEGRIFF FÜR FAHRZEUGE**
OVERHEAD HANDGRIP FOR VEHICLE
POIGNÉE DE MAINTIEN PLAFONNIER POUR VÉHICULE

(30) Priorität: 08.06.2022 DE 102022114443
(43) Veröffentlichungstag der Anmeldung: 16.04.2025
(73) Patentinhaber: H+E Molding Solutions GmbH, 74930 Ittlingen (DE)
(72) Erfinder: BENJAMIN, Milto, 33334 Gütersloh (DE)
(74) Vertreter: Dantz, Jan Henning
(86) Internationale Anmeldenummer: PCT/EP2023/064993
(87) Internationale Veröffentlichungsnummer: WO 2023/237492

(56) Entgegenhaltungen:
- DE-A1- 102006 002 214
- JP-A- 2009 030 796
- US-A1- 2014 093 311
- US-B2- 8 146 208

## Beschreibung

Die vorliegende Erfindung betrifft einen Dachhaltegriff für Fahrzeuge nach dem Oberbegriff des Anspruches 1.

In der DE 10 2019 116 491 A1 ist ein Dachhaltegriff für Fahrzeuge offenbart, bei dem ein Griffkörper an zwei Lagerelementen gehalten ist, die jeweils über ein Einsteckteil an einer Öffnung am Fahrzeugdach fixierbar sind. Zur Verrastung ist an jedem Lagerelement hervorstehende Klammern mit Federstegen vorgesehen, die beim Einführen durch die Öffnung an dem Fahrzeugdach verrastet und einen Rand an der Öffnung hintergreifen. Durch Einfügen eines Sicherungselementes in die Klammer ist das Lagerelement gegen ein Herausziehen gesichert. Damit die Haltekräfte der Federstege an dem Lagerelement ausreichend sind, besteht jeder Federsteg aus einem biegbaren Metallblech und muss mit einer gewissen Kraft durch die Öffnung am Fahrzeugdach eingeschoben werden, was die Montage des Dachhaltegriffes erschwert, gerade wenn die gleiche Person eine Vielzahl von Dachhaltegriffen an einem Tag montieren muss. Zudem gestaltet sich die Demontage des Dachhaltegriffes schwierig, wenn dieser einmal ausgewechselt werden muss, weil dann mit einem Spezialwerkzeug die Federstege umgebogen werden müssen.

In der WO 2008/055838 A1 ist eine Halteeinrichtung für einen Haltegriff offenbart, bei dem an einem Tragteil ein separates Spreizelement fixiert ist, das in ein Loch einfügbar und über ein Sperrglied verriegelbar ist. An dem Spreizelement sind federnde Zungen ausgebildet, die zur Fixierung des Tragteils einen Rand einer Öffnung umgreifen.

Die US 8,146,208 B2 offenbart einen Haltegriff, der über metallische Klammern an einen Fahrzeugkörper fixierbar ist. Die Klammern weisen dabei federnde Stege auf, um ein eine Montageöffnung zu hintergreifen. Ähnliche Haltegriffe zeigen auch US 2014/0093311 und JP 2009 030796.

Es ist daher Aufgabe der vorliegenden Erfindung, einen Dachhaltegriff für Fahrzeuge zu schaffen, der leicht zu montieren ist und hohe Haltekräfte aufnehmen kann.

Diese Aufgabe wird mit einem Dachhaltegriff mit den Merkmalen des Anspruches 1 gelöst.

Bei dem erfindungsgemäßen Dachhaltegriff ist an einem in eine Öffnung einfügbaren Einsteckteil mindestens ein Klemmkörper vorgesehen, der nach der Montage einen Rand der Öffnung hintergreifen kann, wobei ein in das Einsteckteil einfügbarer Riegel vorgesehen ist, über den der mindestens eine Klemmkörper in der den Rand hintergreifenden Position verriegelbar ist. Dadurch kann das Einfügen des Einsteckteils mit geringer Kraft erfolgen, weil der Klemmkörper durch eine Bewegung des Riegels in eine den Rand an der Öffnung hintergreifende Position bringbar ist, so dass der mindestens eine Klemmkörper ohne oder mit nur geringem Kraftwiderstand durch die Öffnung durchführbar ist. Damit können die Montagekräfte von den späteren Haltekräften entkoppelt werden. Zudem lässt sich der Dachhaltegriff einfach demontieren, indem in einem zweistufigen Verfahren zunächst der Riegel aus dem Einsteckteil zumindest teilweise herausgezogen wird, bevor dann der Lagerbock mit dem Einsteckteil aus der Öffnung herausgezogen wird.

Für einen kompakten Aufbau kann der Riegel in einen Kanal an dem Einsteckteil einschiebbar sein. Dabei kann der Riegel zwischen einer vormontierten Position mit mindestens einem bewegbaren Klemmkörper und einer Verriegelungsposition mit mindestens einem verriegelten Klemmkörper verschiebbar an dem Lagerbock gehalten sein.

Das Einsteckteil mit dem Kanal ist vorzugsweise integral mit dem Lagerbock ausgebildet, der einen gegenüber dem Einsteckteil verbreiterten Stützabschnitt aufweist, der an dem Fahrzeugdach abstützbar ist. Dadurch kann der Dachhaltergriff mit wenigen Bauteilen hergestellt werden. Der Klemmkörper ist bevorzugt aus einem anderen Material hergestellt sein als das Einsteckteil, insbesondere aus einem Material mit höherer Festigkeit.

In dem Einsteckteil ist erfindungsgemäß zumindest in einer Wand eine Aussparung zur Aufnahme des mindestens einen Klemmkörpers ausgebildet. Dadurch können in der verriegelten Position Kräfte von der Wand auf den Klemmkörper und den Rand an der Öffnung übertragen werden. Die Wand des Einsteckteils oberhalb des Klemmkörpers kann dabei in geringer Bauhöhe ausgebildet sein, so dass sich eine Verringerung des Einbauvolumens verglichen mit den vorbekannten Befestigungsmitteln mit den Raststegen ergibt. Die Aussparung ist dabei als Käfig ausgebildet, die den Klemmkörper lose an dem Einsteckteil hält und eine Bewegung des Klemmkörpers aus dem Einsteckteil heraus begrenzt. Der Klemmkörper kann mit Spiel innerhalb des Käfigs bewegt werden, bevor er durch den Riegel geklemmt wird. Dabei kann der Klemmkörper unverlierbar in der Aussparung an der Wand gehalten sein, wenn das Einsteckteil den Klemmkörper zumindest vorfixiert.

In einer weiteren Ausgestaltung weist der Riegel mindestens eine Andruckfläche auf, die geneigt zur Einsteckrichtung ausgerichtet ist und mittels der der mindestens eine Klemmkörper von dem Einsteckteil nach außen bewegbar ist. Die zur Einsteckrichtung schräg ausgebildete Andruckfläche, beispielsweise mit einer Neigung zur Einsteckrichtung zwischen 1° bis 10°, kann zum Verspannen des Klemmkörpers nach außen hin eingesetzt werden, um eine spielfreie Fixierung des Klemmkörpers und des Lagerbockes an dem Rand der Öffnung zu gewährleisten.

Für eine einfache Montage kann der Riegel vorzugsweise in der verriegelten Position an dem Lagerbock oder dem Einsteckteil verrastbar sein, wobei entsprechend biegbare Raststege oder andere Rastmittel an dem Riegel und/oder dem Einsteckteil ausgebildet sein können. Statt biegbarer Raststege kann auch eine Klemmung zur Fixierung des Riegels eingesetzt werden, wobei die Verrastung bevorzugt akustisch und haptisch bei der Montage wahrnehmbar ist.

Der Riegel umfasst vorzugsweise mindestens einen biegbaren Steg, an dem der mindestens eine Klemmkörper in einer vormontierten Position fixierbar ist, in der der Riegel zumindest teilweise in das Einsteckteil eingefügt ist und sich der mindestens eine Klemmkörper bereits in der Aussparung an dem Einsteckteil befindet. Aus dieser vormontierten Position kann dann der Riegel relativ zu dem Einsteckteil und dem darin gehaltenen Klemmkörper verschoben werden, um den mindestens einen Klemmkörper aus einer Aufnahme an dem biegbaren Steg zu entfernen und den biegbaren Steg in der verriegelten Position beabstandet von dem mindestens einen Klemmkörper anzuordnen. Dadurch wird in der vormontierten Position über den biegbaren Steg eine Bewegung des Klemmkörpers senkrecht zur Einsteckrichtung ermöglicht, während diese Bewegung durch den Riegel nach dem Verschieben in die Verriegelungsposition blockiert wird, weil benachbart zu dem Klemmkörper kein biegbarer Steg, sondern der Riegel, insbesondere aus einem Vollmaterial, den mindestens einen Klemmkörper kontaktiert. Der mindestens eine biegbare Steg des Riegels kann endseitig optional ein oder mehrere Schlitze aufweisen, in die beim Einschieben des Riegels ein Stabilisierungssteg an dem Kanal des Einsteckteils einfügbar ist.

Der mindestens eine Klemmkörper ist vorzugsweise im Wesentlichen zylindrisch ausgebildet. Dabei kann der mindestens eine Klemmkörper als zylindrisches Rohr, Hülse oder aus einem Vollmaterial hergestellt sein, bevorzugt aus Metall. Optional kann der mindestens eine Klemmkörper aus einem gewickelten Draht hergestellt sein, was die Elastizität erhöht. Der Querschnitt des Drahtes kann dabei kreisförmig, aber auch quadratisch oder mehreckig sein. In einer bevorzugten Ausgestaltung weist der mindestens eine Klemmkörper mindestens eine Schneidkante auf, die sich zumindest teilweise an den Rand der Öffnung eintreiben lässt, so dass in der verriegelten Position der Lagerbock auch gegen eine Verschiebung in axiale Richtung des Klemmkörpers gesichert ist. Der Außendurchmesser des zylindrischen Klemmkörpers ist vorzugsweise kleiner 8mm, insbesondere zwischen 4mm und 6mm. Ferner kann der Klemmkörper als Hülse und geschlitzt ausgebildet sein, insbesondere in axiale Richtung, um die Elastizität zu erhöhen. Ferner kann der mindestens eine Klemmkörper auch eine andere Geometrie aufweisen, beispielsweise als Kugel oder Tonne ausgebildet sein.

Vorzugsweise sind zwei Klemmkörper auf gegenüberliegenden Seiten des Einsteckteils vorgesehen, die jeweils an dem Rand der Öffnung abgestützt sind. Dadurch wird das Einsteckteil über die Klemmkörper zentriert und zudem werden die Haltekräfte erhöht. Optional können auch mehr als zwei Klemmkörper an dem Einsteckteil vorgesehen sein, insbesondere drei oder vier Klemmkörper. Jeder Klemmkörper besteht vorzugsweise aus einem anderen Material als das Einsteckteil und/oder der Riegel.

Der Dachhaltegriff weist vorzugsweise zwei Lagerböcke auf, an denen ein verschwenkbarer Griffkörper gehalten ist, wobei die Lagerböcke bevorzugt in Ausnehmungen an dem Griffkörper einfügbar sind, wenn der Griffkörper hochgeklappt ist, so dass sich der Griffkörper optimiert an die Kontur des Fahrzeugdaches anpassen kann. Der Dachhaltegriff muss dabei nicht unmittelbar an einem Metallblech des Fahrzeugdaches fixiert sein, sondern kann auch mittelbar über die Zwischenschaltung von einem oder mehreren Bauteilen an dem Fahrzeugdach fixiert sein.

In einer weiteren Ausgestaltung umfasst der Griffkörper ein Druckstück, mittels dem der Riegel in das Einsteckteil einschiebbar ist. Dadurch können die optimierten Hebelverhältnisse an dem Griffkörper genutzt werden, um mit geringem Kraftaufwand den Riegel einzuschieben. Vorzugsweise weist der Griffkörper zwei Druckstücke auf und durch eine Schwenkbewegung des Griffkörpers wird über jedes Druckstück jeweils ein Riegel gleichzeitig an einem der zwei Lagerböcke eingeschoben. Dadurch reduziert sich die Anzahl der Montageschritte, da mit einer Bewegung beide Riegel in die verriegelte Position bewegbar sind.

Die Erfindung wird nachfolgend anhand mehrerer Ausführungsbeispiele mit Bezug auf die beigefügten Zeichnungen näher erläutert. Es zeigen:
- Figur 1: eine Explosionsdarstellung eines erfindungsgemäßen Dachhaltegriffes;
- Figur 2: eine perspektivische Ansicht des Dachhaltegriffes der Figur 1 bei der Montage;
- Figur 3: eine Schnittansicht des Dachhaltegriffes der Figur 1 in der vormontierten Position;
- Figur 4: eine Schnittansicht des Dachhaltegriffes der Figur 1 in der Verriegelungsposition;
- Figur 5: eine perspektivische Ansicht des Dachhaltegriffes in der montierten Position mit Blick auf das Fahrzeugdach;
- Figur 6: eine Detailansicht eines montierten Lagerbockes gemäß einem modifizierten Ausführungsbeispiel;
- Figuren 7A bis 7E: mehrere Ansichten unterschiedlicher Klemmkörper, und
- Figuren 8A bis 8C: mehrere Ansichten des Riegels des Dachhaltegriffes;
- Figur 9: eine Schnittansicht durch einen modifizierten Dachhaltegriff bei der Montage;
- Figur 10: eine Explosionsdarstellung eines Lagerbockes mit einem Riegel des Dachhaltegriffes der Figur 9, und
- Figuren 11A und 11B: zwei Schnittansichten des Dachhaltegriffes der Figur 9 in der monierten Position.

Ein Dachhaltegriff 1 umfasst zwei Lagerböcke 2, an denen ein bügelförmiger Griffkörper 3 verschwenkbar gelagert oder optional starr fixiert ist. Jeder Lagerbock 2 wird an einer Öffnung 5, die von einem Rand 6 umgeben ist, an einem Fahrzeugdach 4 festgelegt. Das schematisch dargestellte Fahrzeugdach 4 kann aus einem Metallblech hergestellt sein und unmittelbar mit zwei Öffnungen 5 versehen sein, oder es können weitere Bauteile an dem Fahrzeugdach 4 fixiert sein, die eine Öffnung aufweisen, an denen der Dachhaltegriff 1 befestigt wird.

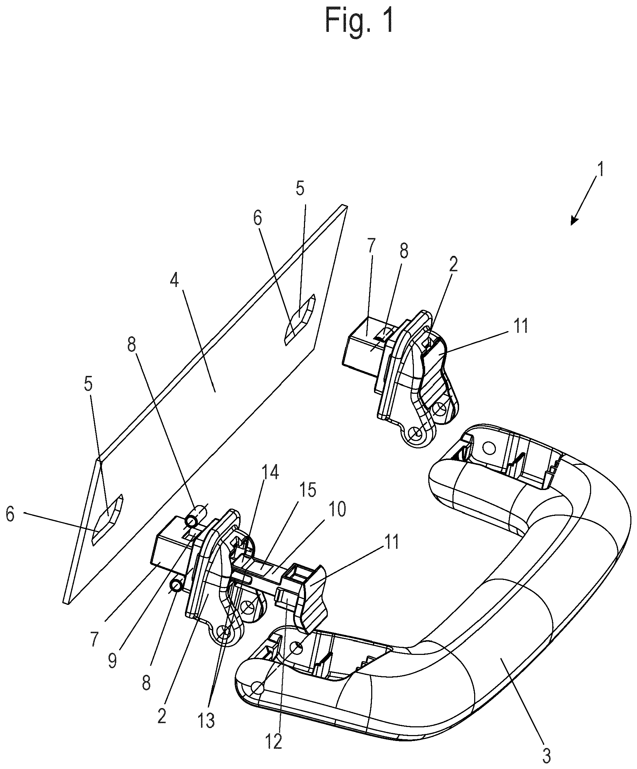

In Figur 1 ist der hintere Lagerbock 2 in der Verriegelungsposition dargestellt, während der vordere Lagerbock 2 in einer vormontierten Position gezeigt ist. Jeder Lagerbock 2 umfasst ein Einsteckteil 7, das in die Öffnung 5 an dem Fahrzeugdach 4 einfügbar ist. An dem Einsteckteil 7 sind an gegenüberliegenden Wänden Aussparungen 9 ausgebildet, die zur Aufnahme jeweils eines Klemmkörpers 8 dienen.

An jedem Lagerbock 2 ist ein Riegel 10 einfügbar, der in einen Kanal an dem Lagerbock 2 und dem Einsteckteil 7 einschiebbar ist. Der Riegel 10 umfasst einen Griffabschnitt 11, der auf der zu dem Griffkörper 3 gewandten Seite an dem Lagerbock 2 montierbar ist und über mindestens einen Raststeg 12 verrastet werden kann. Hierfür ist der biegbare Raststeg 12 mit einem Vorsprung versehen, der in eine Aufnahme an dem Lagerbock 2 verrastbar ist.

Der Riegel 10 umfasst auf der zu dem Griffabschnitt 11 abgewandten Seite zwei biegbare Stege 13, wobei an jedem Steg 13 auf der zu dem Klemmkörper 8 gewandten Seite eine vertiefte, insbesondere gewölbte, Aufnahme 14 ausgebildet ist, die an einer äußeren Kontur des Klemmkörpers 8 in der vormontierten Position anliegt. Benachbart zu der Aufnahme 14 ist eine Andruckfläche 15 ausgebildet, die geneigt zur Einsteckrichtung ausgerichtet ist und mittels der der Klemmkörper 8 an dem Einsteckteil 7 zu einer Außenseite hin bewegbar ist, um diesen zu verspannen.

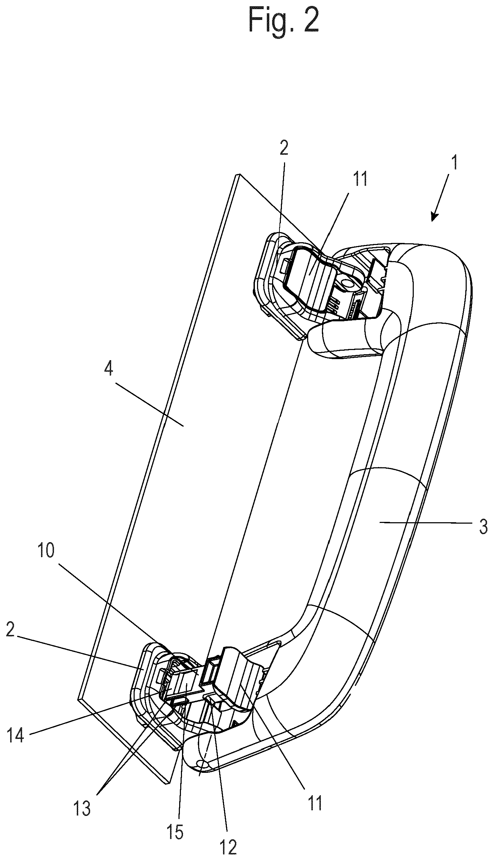

In Figur 2 ist der Dachhaltegriff 1 in einer montierten Position gezeigt, in der ein verbreiterter Abschnitt des Lagerbockes auf der Unterseite des Fahrzeugdaches 4 aufliegt und das jeweilige Einsteckteil 7 durch die Öffnung 5 in dem Fahrzeugdach 4 eingefügt ist. In einen Lagerbock 2 ist der Riegel 10 bereits in die Verriegelungsposition eingefügt, und der Griffabschnitt 11 liegt im Wesentlichen flächenbündig mit einer Oberfläche des Lagerbockes 2. Der andere Riegel 10 befindet sich noch außerhalb des Lagerbockes 2.

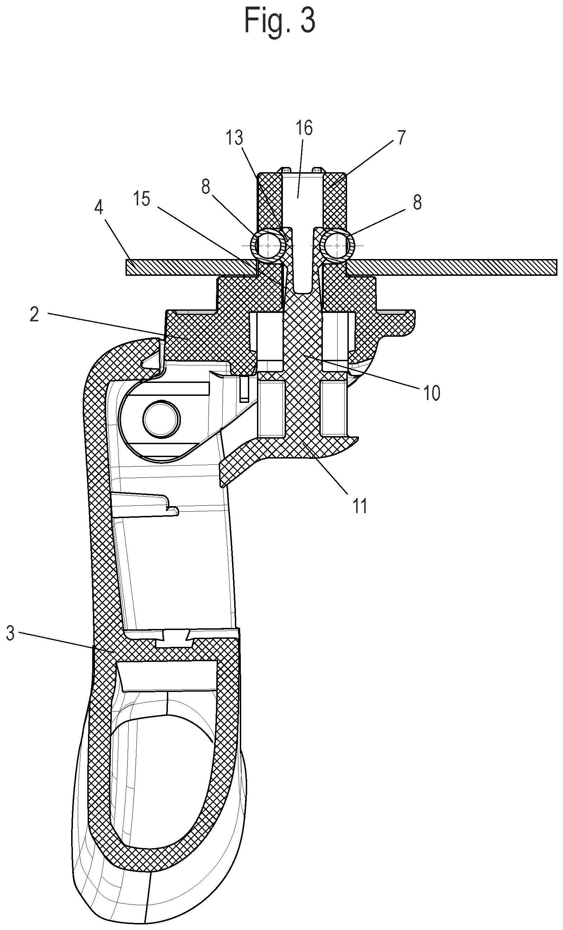

In Figur 3 ist ein Schnitt durch den Dachhaltegriff 1 im Bereich eines Lagerbockes 2 gezeigt, wobei der Riegel 10 sich in einer vormontierten Position befindet. An den beiden biegbaren Stegen 13 des Riegels 10 sind an den Aufnahmen 14 jeweils Klemmkörper 8 eingefügt, wobei in dieser vormontierten Position der Lagerbock 2 zusammen mit dem Riegel 10 durch die Öffnung 5 mit geringem Kraftaufwand durchgesteckt werden kann, da die Klemmkörper 8 an dem Rand 6 die biegbaren Stege 13 nach innen drücken können, so dass die Klemmkörper 8 nach dem Durchführen an dem Rand 6 der Öffnung 5 verrasten. In dieser vormontierten Position kann der Dachhaltegriff 1 auch mit geringem Kraftaufwand wieder von dem Fahrzeugdach 4 demontiert werden, indem das Einsteckteil 7 aus der Öffnung 5 herausgezogen wird.

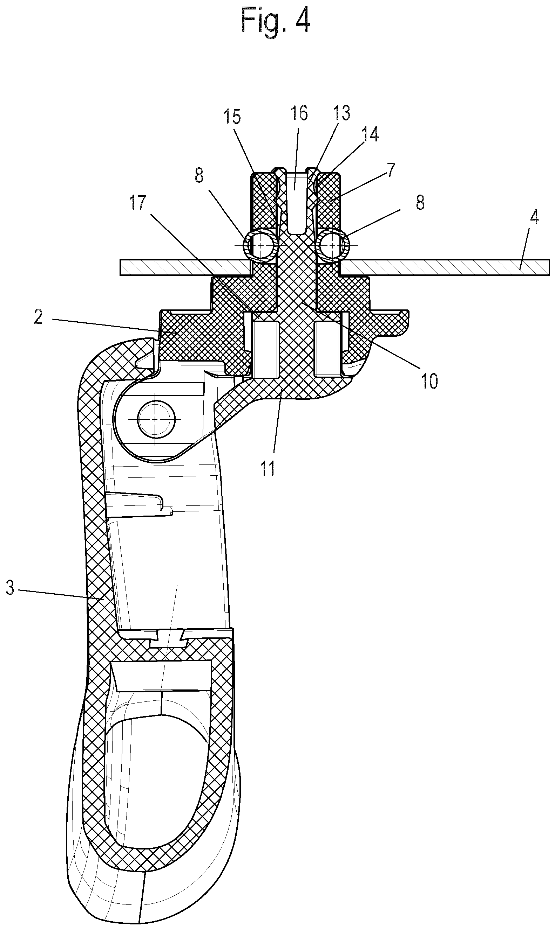

Für eine Verriegelung des Lagerbockes 2 an dem Fahrzeugdach 4 wird der Riegel 10 in den Kanal 16 an dem Einsteckteil 7 eingeschoben, so dass die beiden Klemmkörper 8 jeweils aus der Aufnahme 14 an den biegbaren Stegen 13 entfernt werden. Die Klemmkörper 8 gelangen nun gegen die Andruckfläche 15, die geneigt zur Einsteckrichtung ausgebildet ist und die Klemmkörper nach außen drückt, bis die in Figur 4 gezeigte Position erreicht ist. In der Verriegelungsposition befinden sich die biegbaren Stege 13 beabstandet von den Klemmkörpern, und diese werden durch die Andruckfläche 15 nach außen gedrückt, wobei die Aussparung 9 in der Wand des Einsteckteils 7 eine geringere Größe aufweist als der Außendurchmesser des Klemmkörpers 8, so dass dieser nicht durch die Andruckfläche 15 vollständig von dem Einsteckteil 7 herausgedrückt werden kann.

Wird in dieser Verriegelungsposition an dem Griffkörper 3 gezogen, erfolgt eine Krafteinleitung in das Fahrzeugdach 4 über das Einsteckteil 7 und die beiden Klemmkörper 8, die an dem Rand 6 der Öffnung 5 aufliegen. Eine Bewegung der Klemmkörper 8 aufeinander zu wird durch den Riegel 10 verhindert, der zwischen den Klemmkörpern 8 formstabil ausgebildet ist und bevorzugt aus einem Vollmaterial in diesem Bereich hergestellt ist. Die Einstecktiefe des Riegels 10 kann durch einen Anschlag 17 begrenzt sein, der hervorsteht und mit einer Kontaktfläche an dem Lagerbock 2 zusammenwirkt. Optional können auch an anderen Positionen Anschläge zum Begrenzen der Einstecktiefe vorgesehen sein. Zudem wird der Riegel 10 in der Verriegelungsposition über den mindestens einen Raststeg 12 verrastet.

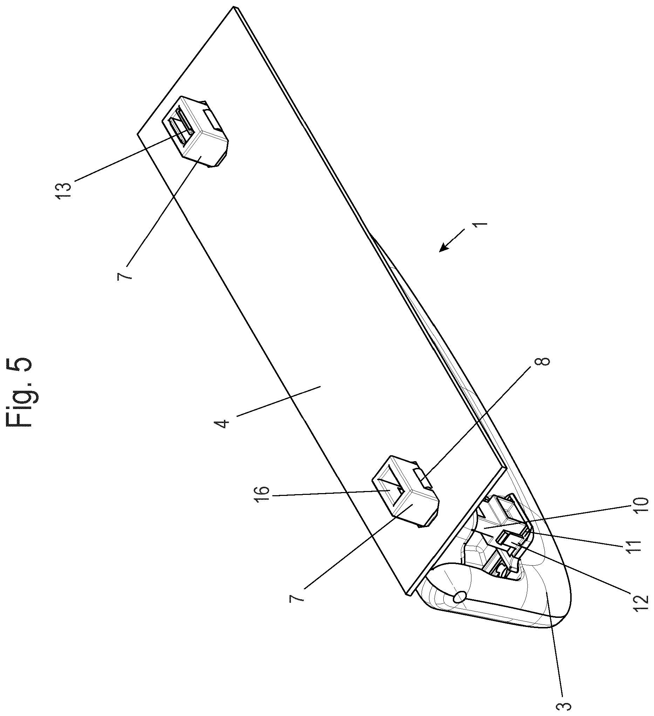

In Figur 5 ist der Dachhaltegriff 1 in einer montierten Position gezeigt, in der die beiden Einsteckteile 7 durch das Fahrzeugdach 4 geführt sind. Die Bauhöhe des Einsteckteils 7 ist verglichen mit den vorbekannten Lösungen gering, beispielsweise unter 20 mm, insbesondere unter 15 mm, so dass zur Montage des Dachhaltegriffes 1 nur wenig Volumen oberhalb des Fahrzeugdaches 4 benötigt wird. Die Klemmkörper 8 liegen an gegenüberliegenden Seiten des Einsteckteils 7 an dem Rand 6 der Öffnung 5 auf und zentrieren somit das Einsteckteil 7.

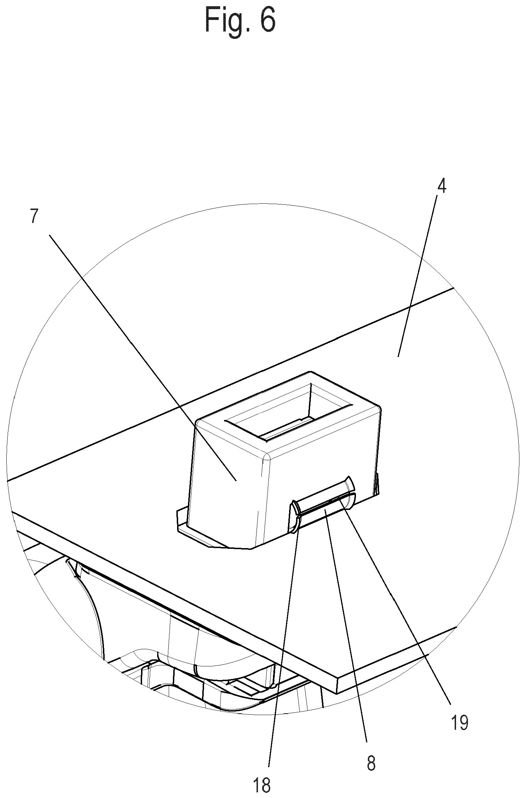

In Figur 6 ist eine Detailansicht eines modifizierten Lagerbockes 2 gezeigt, bei dem der im Wesentlichen zylindrische Klemmkörper 8 an gegenüberliegenden Seiten jeweils eine radial hervorstehende Schneidkante 18 aufweist. Diese hervorstehende Schneidkante 18, beispielsweise durch Umbiegen eines Endabschnittes eines rohrförmigen Materials hergestellt, kann sich bei einer Belastung des Einsteckteils 7 in das Material des Randes 6 an der Öffnung 5 eingraben, so dass nach dem Fixieren des Einsteckteils 7 ein Verschieben des Lagerbockes 2 in axiale Richtung des Klemmkörpers 8 verhindert wird. Der Klemmkörper 8 weist zudem einen axialen Schlitz 19 auf, was die Herstellung des Klemmkörpers 8 vereinfacht.

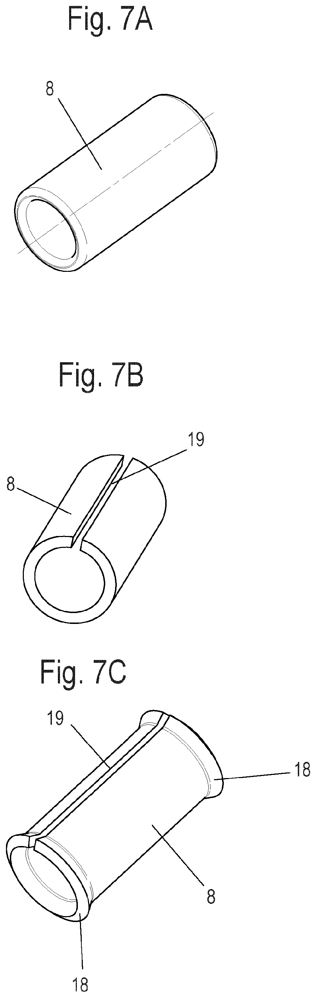

In den Figuren 7A bis 7E sind verschiedene Klemmkörper gezeigt, die an einem Einsteckteil 7 montiert werden können. Die Klemmkörper bestehen bevorzugt aus Metall, können aber auch aus anderen Materialien hergestellt werden. In Figur 7A ist ein zylindrischer Klemmkörper 8 gezeigt, der als Hülse oder Rohr ausgebildet ist, beispielsweise aus Metall. Dieser Klemmkörper 8 kann optional mit einem axialen Schlitz 19 versehen werden, wie dies in Figur 7B gezeigt ist. Zusätzlich zu dem axialen Schlitz 19 kann an einem Endabschnitt oder an gegenüberliegenden Endabschnitten jeweils eine radial hervorstehende Schneidkante 18 ausgeformt werden, um den Klemmkörper 8 gegen ein axiales Verschieben zu sichern.

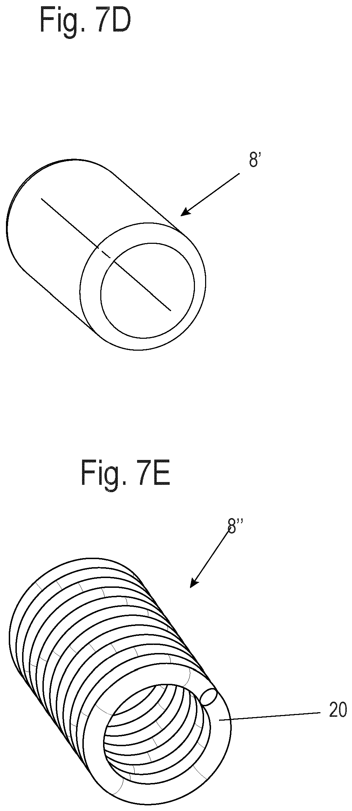

In der Figur 7D ist ein modifizierter Klemmkörper 8' gezeigt, der statt als Hülse aus einem Vollmaterial hergestellt ist. Statt der glatten zylindrischen Außenwand kann die Außenwand auch profiliert oder geprägt sein, um den Klemmkörper 8' verschiebesicher zu gestalten.

In Figur 7E ist ein Klemmkörper 8" gezeigt, der aus einem gewickelten Draht 20 hergestellt ist. Der Draht 20 ist in einer Helix geformt und kann in die Aussparung 9 an dem Einsteckteil 7 eingefügt werden. Statt einem kreisrunden Querschnitt des Drahtes 20 können auch Drähte mit einer anderen Querschnittsgeometrie eingesetzt werden, beispielsweise quadratisch oder mehreckig mit einer äußeren Ecke, so dass durch die Formgebung des Drahtes ein erhöhter Schutz gegen ein Verschieben des Klemmkörpers 8" in axiale Richtung gewährleistet ist.

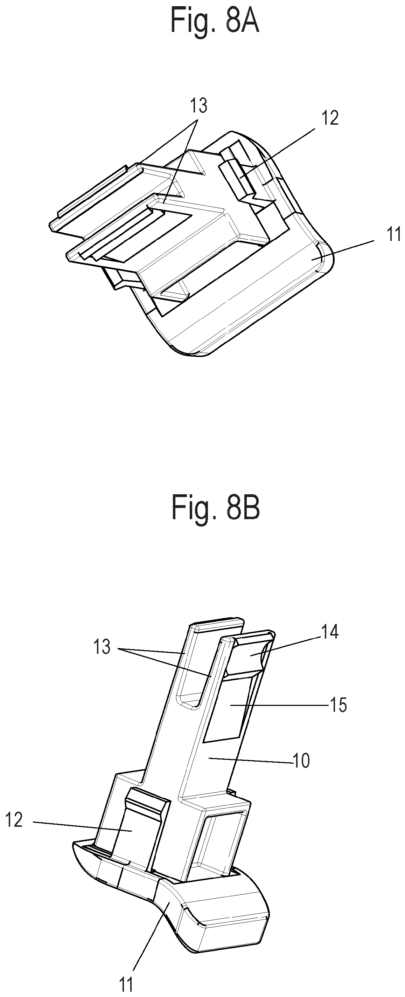

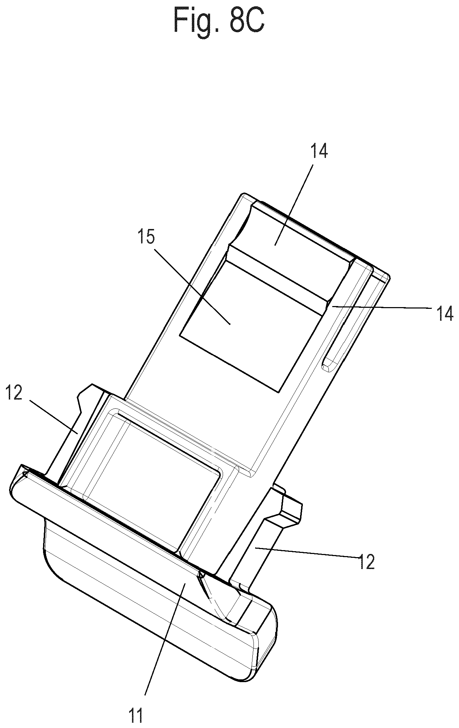

In den Figuren 8A bis 8C ist der Riegel 10 im Detail gezeigt, der ein stiftförmiges Element mit im Wesentlichen rechteckigen Querschnitt aufweist, an dem endseitig biegbare Stege 13 ausgebildet sind. Jeder Steg 13 weist dabei die gerundete Aufnahme 14 und die Andruckfläche 15 auf. Der Stift des Riegels 10 verbreitert sich zu dem Griffabschnitt 11 hin und kann somit in den Lagerbock 2 eingefügt und dort über den Raststeg 12 verrastet werden.

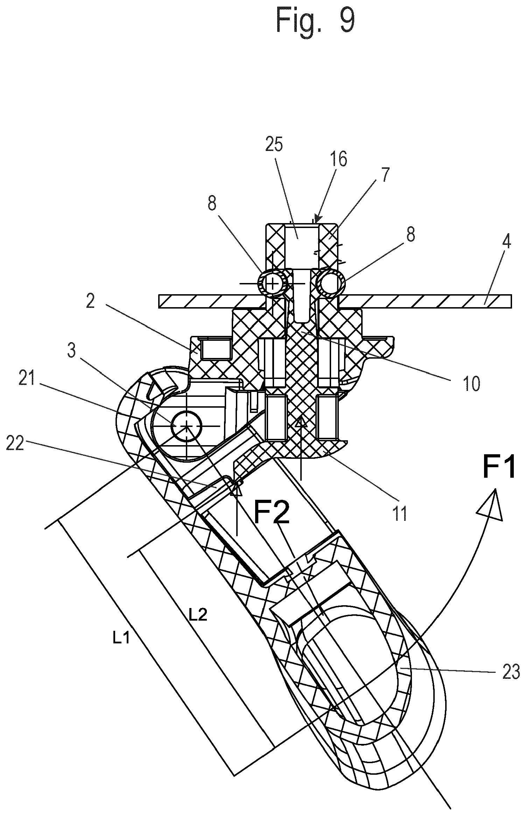

Der in Figur 9 dargestellte Dachhaltergriff unterschiedet sich von dem vorangegangenen Ausführungsbeispiel durch einen Stabilisierungssteg 25, der zwei gegenüberliegende Wände an dem Kanal 16 des Einsteckteils 7 miteinander verbindet. Der Stabilisierungssteg 25 verstärkt das Einsteckteil 7 in einem Bereich oberhalb des Fahrzeugdaches 4. Ferner ist gezeigt, dass zur Erleichterung der Montage der Riegel 10 nicht von Hand montiert werden muss, sondern der Griffkörper 3 eingesetzt werden kann. Hierfür ist an dem Griffkörper 3 ein Druckstück 22 in Form eines hervorstehenden Steges ausgebildet, das bei Verschwenken des Griffkörpers 3 um eine Achse 21 gegen den Griffabschnitt 11 des Riegels 10 drückt, so dass der Riegel 10 in den Kanal 16 eingeschoben wird. Das Druckstück 22 kann dabei entlang dem Griffabschnitt 11 gleiten. Dadurch kann die Montage leichtgängig erfolgen, weil ein Griffbügel 23 an dem Griffkörper 3 in einem größeren Abstand L1 zu der Achse 21 angeordnet ist als zu dem Druckstück 22, das in einem Abstand L2 zu dem Griffbügel angeordnet ist. Die wirksame Hebellänge führt zu einem optimierten Übersetzungsverhältnis beim Einschieben des Riegels 10. Zudem kann durch ein Verschwenken des Griffkörpers 3 aus der vormontierten Position ein gleichzeitiges Einschieben beider Riegel 10 in die Verriegelungsposition erfolgen.

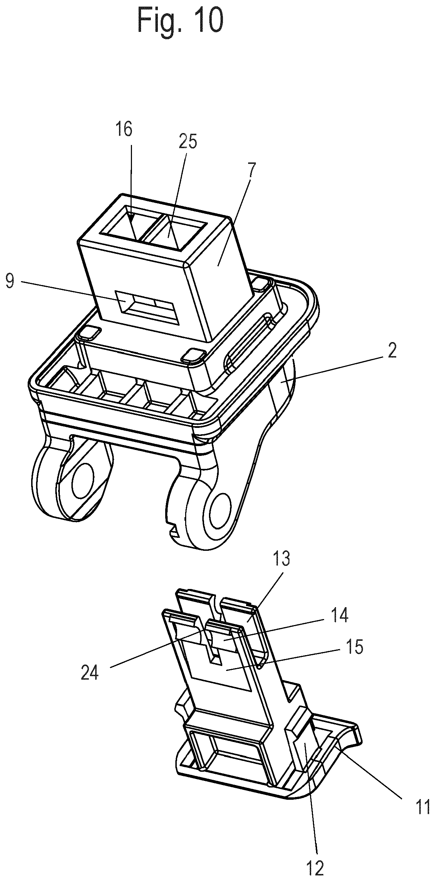

In Figur 10 ist der Lagerbock 2 mit einem Riegel 10 des Dachhaltegriffes der Figur 9 gezeigt. Es ist erkennbar, dass der Stabilisierungssteg 25 den Kanal 16 in zwei voneinander getrennte Kammern unterteilt. Um den Riegel 10 mit den biegbaren Stegen 13 in den Kanal 16 einschieben zu können, sind die Stege 13 endseitig mit einem Schlitz 24 versehen, in den der Stabilisierungssteg 25 bei der Montage einfügbar ist.

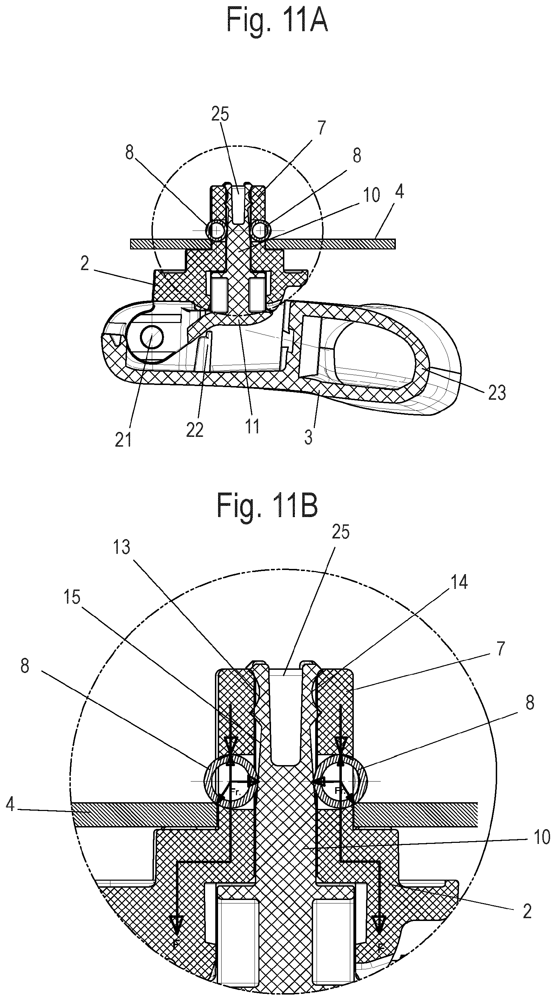

In den Figuren 11A und 11B ist die verriegelte Position gezeigt, in der der Riegel 10 durch Drehen des Griffkörpers 3 vollständig in den Kanal 16 eingeschoben ist und die Klemmkörper 8 durch die Andruckfläche 15 nach außen gedrückt sind. Wird in den Griffkörper 3 eine Gewichtskraft nach unten eingeleitet, führt dies zu einer Kraft in dem Einsteckteil 7 auf die beiden Klemmkörper 8, die jeweils auf einer Seite an dem Riegel und zusätzlich an dem Rand 6 um die Öffnung 6 abgestützt sind. Durch den symmetrischen Aufbau können die eingeleiteten Kräfte optimiert in das Fahrzeugdach 4 eingeleitet werden.

In den dargestellten Ausführungsbeispielen wird jeder Lagerbock 2 einzeln an einer Öffnung des Fahrzeugdaches 4 fixiert. Es ist natürlich möglich, die beiden Lagerböcke 2 miteinander zu verbinden und als Einheit zu montieren. Die Lagerböcke 2 können auch integral miteinander ausgebildet sein.

### Bezugszeichenliste

- 1: Dachhaltegriff
- 2: Lagerbock
- 3: Griffkörper
- 4: Fahrzeugdach
- 5: Öffnung
- 6: Rand
- 7: Einsteckteil
- 8, 8', 8": Klemmkörper
- 9: Aussparung
- 10: Riegel
- 11: Griffabschnitt
- 12: Raststeg
- 13: Steg
- 14: Aufnahme
- 15: Andruckfläche
- 16: Kanal
- 17: Anschlag
- 18: Schneidkante
- 19: Schlitz
- 20: Draht
- 21: Achse
- 22: Druckstück
- 23: Griffbügel
- 24: Schlitz
- 25: Stabilisierungssteg

## Patentansprüche

1. Dachhaltegriff (1) für Fahrzeuge mit mindestens einem Lagerbock (2), an dem ein Griffkörper (3) gehalten ist und der an einer von einem Rand (6) umgebenen Öffnung (5) an einem Fahrzeugdach (4) fixierbar ist, wobei der mindestens eine Lagerbock (2) ein durch die Öffnung (5) einfügbares Einsteckteil (7) mit mindestens einem an dem Rand (6) der Öffnung (5) hintergreifend anordnenbaren Klemmkörper (8, 8', 8") aufweist, wobei ein das Einsteckteil (7) einfügbarer Riegel (10) vorgesehen ist, über den der mindestens eine Klemmkörper (8, 8', 8") in der den Rand (6) hintergreifenden Position verriegelbar ist und in dem Einsteckteil (7) in einer Wand eine Aussparung (9) zur Aufnahme des mindestens einen Klemmkörpers (8, 8', 8") ausgebildet ist, **dadurch gekennzeichnet, dass** die Aussparung (9) als Käfig ausgebildet ist, die den Klemmkörper (8, 8', 8") lose an dem Einsteckteil (7) hält.

2. Dachhaltegriff nach Anspruch 1, **dadurch gekennzeichnet, dass** der Riegel (10) in einen Kanal (16) an dem Einsteckteil (7) einschiebbar ist.

3. Dachhaltegriff nach Anspruch 1 oder 2, **dadurch gekennzeichnet, dass** der Riegel (10) mindestens eine Andruckfläche (15) aufweist, die geneigt zur Einsteckrichtung ausgerichtet ist und mittels der der mindestens eine Klemmkörper (8, 8', 8") von dem Einsteckteil (7) nach außen bewegbar ist.

4. Dachhaltegriff nach einem der vorhergehenden Ansprüche, **dadurch gekennzeichnet, dass** der Riegel (10) in einer verriegelten Position an dem Lagerbock (2) verrastbar ist.

5. Dachhaltegriff nach einem der vorhergehenden Ansprüche, **dadurch gekennzeichnet, dass** der Riegel (10) mindestens einen biegbaren Steg (13) aufweist, an dem der mindestens eine Klemmkörper (8, 8', 8") in einer vormontierten Position fixierbar ist und der Riegel (10) relativ zu dem an dem Einsteckteil (7) gehaltenen Klemmkörper (8, 8', 8") verschiebbar ist, um den biegbaren Steg (13) in der verriegelten Position beabstandet von dem mindestens einen Klemmkörper (8, 8', 8") zu positionieren.

6. Dachhaltegriff nach einem der vorhergehenden Ansprüche, **dadurch gekennzeichnet, dass** der mindestens eine Klemmkörper (8, 8', 8") eine im Wesentlichen zylindrische Form besitzt.

7. Dachhaltegriff nach einem der vorhergehenden Ansprüche, **dadurch gekennzeichnet, dass** der mindestens eine Klemmkörper (8, 8', 8") mindestens eine Schneidkante (18) aufweist, die zumindest teilweise in den Rand (6) in der Öffnung (5) eintreibbar ist.

8. Dachhaltegriff nach einem der vorhergehenden Ansprüche, **dadurch gekennzeichnet, dass** der mindestens eine Klemmkörper (8") aus einem gewickelten Draht (20) hergestellt ist.

9. Dachhaltegriff nach einem der vorhergehenden Ansprüche, **dadurch gekennzeichnet, dass** zwei Klemmkörper (8, 8', 8") auf gegenüberliegenden Seiten des Einsteckteils (7) vorgesehen sind, die jeweils an dem Rand (6) der Öffnung (5) abgestützt sind.

10. Dachhaltegriff nach einem der vorhergehenden Ansprüche, **dadurch gekennzeichnet, dass** der Dachhaltegriff (1) zwei Lagerböcke (2) umfasst, an denen der Griffkörper (3) verschwenkbar gehalten ist.

11. Dachhaltegriff nach einem der vorhergehenden Ansprüche, **dadurch gekennzeichnet, dass** der Griffkörper (3) mindestens ein Druckstück (22) umfasst, mittels dem der Riegel (10) in das Einsteckteil (7) einschiebbar ist.

12. Dachhaltegriff nach Anspruch 11, **dadurch gekennzeichnet, dass** der Griffkörper (3) zwei Druckstücke (22) umfasst und durch eine Schwenkbewegung des Griffkörpers (3) durch jedes Druckstück (22) jeweils ein Riegel (10) gleichzeitig an einem der zwei Lagerböcke (2) einschiebbar ist.

13. Fahrzeug mit einem Fahrzeugdach (4), an dem mindestens ein Dachhaltegriff (1) nach einem der vorhergehenden Ansprüche fixiert ist.

## Claims

1. Roof handle (1) for vehicles with at least one bearing block (2) on which a handle body (3) is held and which can be fixed to an opening (5) on a vehicle roof (4), the opening being surrounded by an edge (6), wherein the at least one bearing block (2) comprises an insertion part (7) which can be inserted through the opening (5) with at least one clamping body (8, 8', 8") that can be positioned to reach behind the edge (6) of the opening (5), wherein a latch (10) that can be inserted into the insertion part (7) is provided, by means of which the at least one clamping body (8, 8', 8") can be locked in the position reaching behind the edge (6) and a recess (9) for the reception of the at least one clamping body (8, 8', 8") is formed in a wall on the insertion part (7), **characterized in that** the recess (9) is formed as a cage which holds the clamping body (8, 8', 8") loosely on the insertion part (7).

2. Roof handle according to claim 1, **characterised in that** the latch (10) can be pushed into a channel (16) on the insertion part (7).

3. Roof handle according to claim 1 or 2, **characterised in that** the latch (10) comprises at least one pressing surface (15) which is aligned at an angle to the insertion direction and by means of which the at least one clamping body (8, 8', 8") can be moved outwards from the insertion part (7).

4. Roof handle according to one of the preceding claims, **characterised in that** the latch (10) can be latched in a locked position on the bearing block (2).

5. Roof handle according to one of the preceding claims, **characterised in that** the latch (10) comprises at least one bendable web (13) on which the at least one clamping body (8, 8', 8") can be fixed in a pre-mounted position and the latch (10) can be displaced relative to the clamping body (8, 8', 8") held on the insertion part (7) in order to position the bendable web (13) in the locked position at a distance from the at least one clamping body (8, 8', 8").

6. Roof handle according to one of the preceding claims, **characterised in that** the at least one clamping body (8, 8', 8") has a substantially cylindrical shape.

7. Roof handle according to one of the preceding claims, **characterised in that** the at least one clamping body (8, 8', 8") comprises at least one cutting edge (18) which can be driven at least partially into the edge (6) in the opening (5).

8. Roof handle according to one of the preceding claims, **characterised in that** the at least one clamping body (8") is made of a wound wire (20).

9. Roof handle according to one of the preceding claims, **characterised in that** two clamping bodies (8, 8', 8") are provided on opposite sides of the insertion part (7), each of which is supported on the edge (6) of the opening (5).

10. Roof handle according to one of the preceding claims, **characterised in that** the roof handle (1) includes two bearing blocks (2) on which the handle body (3) is pivotably held.

11. Roof handle according to one of the preceding claims, **characterised in that** the handle body (3) includes at least one pressing piece (22), by means of which the latch (10) can be pushed into the insertion part (7).

12. Roof handle according to claim 11, **characterised in that** the handle body (3) includes two pressing pieces (22) and, by a pivoting movement of the handle body (3) by each pressing piece (22), a latch (10) can be pushed in simultaneously on one of the two bearing blocks (2).

13. Vehicle with a vehicle roof (4), to which at least one roof handle (1) according to one of the preceding claims is fixed.

## Revendications

1. Poignée de plafond (1) pour véhicules comprenant au moins un support de palier (2) sur lequel est retenu un corps de poignée (3) et pouvant être fixée sur un plafond de véhicule (4) sur une ouverture (5) entourée par un bord (6), l'au moins un support de palier (2) comportant une partie insérée (7) qui peut être introduite à travers l'ouverture (5), munie d'au moins un élément de serrage (8, 8', 8") pouvant être disposé de façon à passer derrière le bord (6) de l'ouverture (5), dans laquelle est prévue une barre (10) qui peut être introduite dans la partie insérée (7) et par laquelle l'au moins un élément de serrage (8, 8', 8") peut être verrouillé dans la position passée derrière le bord (6) et une découpe (9) est formée dans la partie insérée (7) dans une paroi pour recevoir l'au moins un élément de serrage (8, 8', 8"), **caractérisée en ce que** la découpe (9) est conformée comme une cage qui retient l'élément de serrage (8, 8', 8") sans serrer sur la partie insérée (7).

2. Poignée de plafond selon la revendication 1, **caractérisée en ce que** la barre (10) peut être insérée dans un canal (16) sur la partie insérée (7).

3. Poignée de plafond selon la revendication 1 ou 2, **caractérisée en ce que** la barre (10) comporte au moins une surface d'appui (15) qui est inclinée par rapport au sens d'insertion et au moyen de laquelle l'au moins un élément de serrage (8, 8', 8") peut être déplacé vers l'extérieur à partir de la partie insérée (7).

4. Poignée de plafond selon l'une des revendications précédentes, **caractérisée en ce que** la barre (10) peut être enclenchée dans une position verrouillée sur le support de palier (2).

5. Poignée de plafond selon l'une des revendications précédentes, **caractérisée en ce que** la barre (10) comporte au moins une ailette flexible (13) sur laquelle l'au moins un élément de serrage (8, 8', 8") peut être fixé dans une position préassemblée et la barre (10) est capable de translation par rapport à l'élément de serrage (8, 8', 8") retenu sur la partie insérée (7) pour positionner l'ailette flexible (13) à distance de l'au moins un élément de serrage (8, 8', 8") dans la position verrouillée.

6. Poignée de plafond selon l'une des revendications précédentes, **caractérisée en ce que** l'au moins un élément de serrage (8, 8', 8") possède une forme sensiblement cylindrique.

7. Poignée de plafond selon l'une des revendications précédentes, **caractérisée en ce que** l'au moins un élément de serrage (8, 8', 8") comporte au moins un bord coupant (18) qui peut être enfoncé au moins en partie dans le bord (6) dans l'ouverture (5).

8. Poignée de plafond selon l'une des revendications précédentes, **caractérisée en ce que** l'au moins un élément de serrage (8") est fait d'un fil métallique (20) enroulé.

9. Poignée de plafond selon l'une des revendications précédentes, **caractérisée en ce que** deux éléments de serrage (8, 8', 8"), qui s'appuient chacun sur le bord (6) de l'ouverture (5), sont prévus sur des côtés opposés de la partie insérée (7).

10. Poignée de plafond selon l'une des revendications précédentes, **caractérisée en ce que** la poignée de plafond (1) comprend deux supports de palier (2) sur lesquels le corps de poignée (3) est retenu de façon pivotante.

11. Poignée de plafond selon l'une des revendications précédentes, **caractérisée en ce que** le corps de poignée (3) comporte au moins un poussoir (22) au moyen duquel la barre (10) peut être enfoncée dans la partie insérée (7).

12. Poignée de plafond selon la revendication 11, **caractérisée en ce que** le corps de poignée (3) comprend deux poussoirs (22) et chaque barre (10) peut être insérée simultanément dans un des deux supports de palier (2) respectivement par chaque poussoir (22) par un mouvement pivotant du corps de poignée (3).

13. Véhicule muni d'un plafond de véhicule (4) auquel est fixée au moins une poignée de plafond (1) selon l'une des revendications précédentes.
